# EUROPÄISCHE PATENTSCHRIFT

(11) **EP 2 614 387 B1**
(45) Veröffentlichungstag und Bekanntmachung des Hinweises auf die Patenterteilung: **17.04.2019**
(21) Anmeldenummer: 11745702.8
(22) Anmeldetag: 13.08.2011
(51) Int. Cl.: G01T 1/167

(54) **VORRICHTUNG ZUR DETEKTION VON VERDÄCHTIGEN GEGENSTÄNDEN**
DEVICE FOR DETECTING SUSPICIOUS OBJECTS
DISPOSITIF DE DÉTECTION D'OBJETS SUSPECTS

(30) Priorität: 09.09.2010 DE 102010044802
(43) Veröffentlichungstag der Anmeldung: 17.07.2013
(73) Patentinhaber: Smiths Heimann GmbH, 65205 Wiesbaden (DE)
(72) Erfinder: GEUS, Georg, 65201 Wiesbaden (DE)
(74) Vertreter: Greif, Thomas
(86) Internationale Anmeldenummer: PCT/EP2011/004083
(87) Internationale Veröffentlichungsnummer: WO 2012/031660

(56) Entgegenhaltungen:
- GB-A- 2 440 937
- JP-A- 8 166 359
- US-A1- 2008 298 546
- US-A1- 2009 116 617

## Beschreibung

Die Erfindung betrifft eine Vorrichtung zur Detektion von verdächtigen Gegenständen, die einen Strahlungstunnel aufweist, in dem eine Röntgenstrahlungsquelle und eine Detektoreinheit angeordnet sind, deren Detektoren zur Detektion von transmittierter Strahlung auf die Röntgenstrahlungsquelle ausgerichtet sind.

Als Vorrichtungen zur Detektion von verdächtigen Gegenständen werden bekannterweise Scanner eingesetzt, die mit Röntgenstrahlen ein Transmissionsbild des zu untersuchenden Objekts erzeugen. Von einer Detektoreinheit werden dabei die nicht von dem Untersuchungsobjekt absorbierten Röntgenstrahlen detektiert.

Bei den bekannten, beispielsweise in der DE 101 31 407-A beschriebenen Inspektionsanlagen werden die zu untersuchenden Gepäckstücke mittels eines entsprechend gestalteten Transportbandes durch den Strahlungstunnel bewegt, in dem eine oder mehrere Strahlungsquellen und darauf ausgerichtete Detektoreinheiten angeordnet sind. Aus JP08166359 ist eine Vorrichtung zur Inspektion von LKWs bekannt.

Der Einsatz dieser bekannten Vorrichtungen zur Untersuchung von Personen, beispielsweise von Flugpassagieren, auf verdächtige Gegenstände, ist jedoch mit folgenden Nachteilen verbunden:
Um auf das Transportband zu gelangen, muss die zu untersuchende Person über eine Stufe hochsteigen. Der zu überwindende Höhenunterschied kann durch eine entsprechende Gestaltung der Vorrichtung zwar gering gehalten werden, bereitet jedoch insbesondere älteren oder behinderten Menschen Schwierigkeiten.

Beim Anlauf des Transportbandes für die Untersuchung und beim Abbremsen im Anschluss an die Untersuchung werden die Personen Beschleunigungskräften ausgesetzt. Die Beschleunigungskräfte können zwar durch eine entsprechende Betriebsweise des Transportbandes verringert werden, bereiten jedoch insbesondere Personen mit körperlichen Beeinträchtigungen Probleme. Es besteht die Gefahr, dass die Personen das Gleichgewicht verlieren.

Die Relativgeschwindigkeit zwischen dem Transportband und den Röntgenstrahlen muss sehr genau eingehalten werden, um die Röntgendosis pro Scanintervall auf den gewünscht niedrigen Werten zu halten. Die exakte Einhaltung der Relativgeschwindigkeit kann durch Störfaktoren wie Verschmutzung des Bandes, Änderung der Bandgeschwindigkeit als Folge unterschiedlichen Gewichts der Personen oder als Folge von Gewichtsverlagerungen wie Bewegungen der Personen beeinträchtigt werden.

Der Erfindung liegt daher die Aufgabe zugrunde, eine zur Untersuchung von Personen geeignete Vorrichtung der gattungsgemäßen Art zu schaffen, die eine exakte Relativgeschwindigkeit zwischen der Person und der Röntgenstrahlung innerhalb des Untersuchungsbereichs gewährleistet und zugleich die Gefährdung von insbesondere älteren und behinderten Personen während der Untersuchung ausschließt.

Diese Aufgabe wird durch die Merkmale des Patentanspruches 1 gelöst.

Die Strahlungsquelle mit der darauf ausgerichteten Detektoreinheit wird um die zu untersuchende Person bewegt. Die Bewegung der Strahlungsquelle und der Detektoreinheit erfolgt dabei bogenförmig entlang eines Kreisbogens. Dazu ist der Rahmen um eine zentrale senkrechte Achse drehbar. Einer der senkrechten Träger, bevorzugt der Träger mit der Strahlungsquelle, ist mit der Achse verbunden, bevorzugt an dieser befestigt. Nach der Erfindung weist die Grundfläche des Strahlungstunnels die Form eines Kreissektors, bevorzugt die Form eines Halbkreises oder nahezu eines Halbkreises, auf.

Der Rahmen mit den beiden Trägern ist um die zentrale Achse entlang eines Kreisabschnitts drehbar, der von etwa 30° bis fast 360° beträgt. Als vorteilhaft hat sich gezeigt, wenn die beiden Träger mittels eines Drehantriebs um etwa 180° gedreht werden.

Entsprechend ist auch der Strahlungstunnel mit einer Grundfläche in Form eines Kreissektors gestaltet. Die Größe des Kreissektors und somit des Strahlungstunnels reicht von etwa 30° bis annähernd an einen Vollkreis. Ein kleiner Kreissektor hat den Vorteil eines geringen Flächenverbrauchs und wird somit bevorzugt bei beengten Platzverhältnissen eingesetzt. Ein Strahlungstunnel mit einer Grundfläche, die annähernd einen Vollkreis erreicht, hat den Vorteil, dass nur kleine

Öffnungen vorhanden sind, durch die Röntgenstrahlen nach außen treten können. Er kann annähernd als ein Labyrinth-System mit sehr geringer Außendosisbelastung gestaltet werden.

Die abhängigen Ansprüche enthalten bevorzugte, da besonders vorteilhafte Ausgestaltungen der Erfindung:
Innerhalb des abgeschirmten Strahlungstunnels ist ein Untersuchungstunnel angeordnet, den die zu untersuchende Person betritt. Die Seitenwände des Untersuchungstunnels sind aus für Röntgenstrahlen leicht durchdringbaren Materialien gefertigt. Die beiden Träger des Rahmens bewegen sich dann im Zwischenbereich zwischen dem Strahlungstunnel und dem Untersuchungstunnel. Die Form des Untersuchungstunnels ist der Form des Strahlungstunnels angepasst. Nach der Erfindung weist die Grundfläche des Strahlungstunnels die Form eines Kreissektors auf, wobei die Grundfläche des Untersuchungstunnels bevorzugt die Form eines Kreisringsektors mit etwas geringerem äußeren Radius aufweist.

Bevorzugt erfolgt die Untersuchung mit Röntgenstrahlen, die fächerförmig in einer senkrechten Strahlenebene abgegeben werden, auf die eine senkrechte Detektorzeile ausgerichtet ist. Dazu ist an einem der senkrechten Träger eine Strahlungsquelle mit zumindest einem Kollimator befestigt, der andere senkrechte Träger trägt zumindest eine senkrechte Detektorzeile.

Nachfolgend wird die Erfindung anhand eines vereinfacht dargestellten Ausführungsbeispiels näher erläutert.

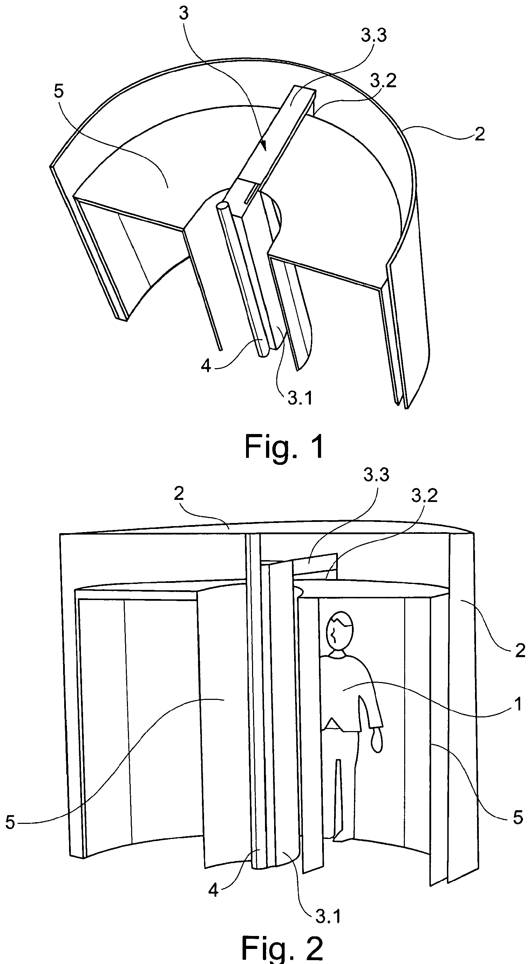

Die Figuren 1 und 2 zeigen jeweils in Schrägansicht eine Vorrichtung nach der Erfindung mit einem Strahlungstunnel mit halbkreisförmiger Grundfläche.

Die in der Zeichnung dargestellte Vorrichtung dient zur Überprüfung von Personen 1 auf mitgeführte verdächtige Gegenstände. Sie wird beispielsweise auf Flughäfen eingesetzt, um Flugpassagiere zu prüfen. Die Vorrichtung ist als Scanner gestaltet, die mit niedrig dosierten Röntgenstrahlen in einem Energiebereich von 10 bis 500 KeV ein Transmissionsbild erzeugt. Durch geeignete Strahlungsfilter und angepasste Strahlungsdetektoren sind die Ein- bzw. Ausblendung verschiedener Energiebereiche aus dem oben genannten Strahlungsspektrum möglich.

Die Vorrichtung enthält einen Strahlungstunnel 2, dessen Grundfläche die Form eines Kreissektors hat. Die senkrechte Außenwand des Strahlungstunnels 2 ist so gestaltet, dass sie Röntgenstrahlen abschirmt. Dazu enthält sie ein Röntgenstrahlen absorbierendes Material. Die Außenwand hat die Form einer Zylinderschale, wobei die Grundfläche und die Außenwand so gestaltet sind, dass ein Winkel von mehr als 30° bis annähernd einem Vollkreis abgedeckt wird. Bevorzugt hat die Grundfläche die Form eines Halbkreises oder nahezu eines Halbkreises, entsprechend erstreckt sich die Außenwand über einen Winkelbereich von 180° oder nahezu 180°.

In dem Strahlungstunnel 2 ist ein über den Untersuchungsbereich bewegbarer Rahmen 3 angeordnet. Der Rahmen 3 besteht aus zwei mit Abstand parallel voneinander senkrecht verlaufenden und fest miteinander verbundenen Trägern 3.1, 3.2. Im Ausführungsbeispiel sind die beiden senkrechten Träger 3.1, 3.2 über einen Querträger 3.3 miteinander verbunden. An einem senkrechten Träger 3.1 ist die Strahlungsquelle, an dem anderen senkrechten Träger 3.2 die Detektoreinheit befestigt. Die beiden miteinander verbundenen Träger 3.1, 3.2 werden mittels eines Antriebs über den Untersuchungsbereich bewegt, in den sich die zu untersuchende Person 1 während des Scanvorgangs befindet. Bei dem bevorzugten Ausführungsbeispiel ist der Rahmen 3 um die zentrale Achse 4 mittels eines Drehantriebs schwenkbar. An der zentralen Achse 4 ist einer der senkrechten Träger, bevorzugt der Träger 3.1 mit der Strahlungsquelle, befestigt. Der andere Träger 3.2 schwenkt synchron mit, so dass die an ihm befestigten Detektoren immer auf die Strahlungsquelle ausgerichtet bleiben. Der Untersuchungsbereich befindet sich zwischen den beiden senkrechten Trägern 3.1, 3.2.

Zur Durchführung eines Scanvorgangs ist an dem inneren senkrechten Träger 3.1 eine Strahlungsquelle mit zumindest einem Kollimator befestigt, der Röntgenstrahlen in einer senkrechten Strahlenebene abgibt. Die Strahlenebene ist auf eine senkrechte Detektorzeile ausgerichtet, die an dem äußeren senkrechten Träger 3.2 befestigt ist.

Bevorzugt ist innerhalb des Strahlungstunnels 2 ein Untersuchungstunnel 5 angeordnet, dessen Seitenwand aus für Röntgenstrahlen leicht durchdringbaren Materialien gefertigt sind und eine der Außenwand des Strahlungstunnels 2 entsprechende Form aufweist.

Typischerweise werden an dieser Stelle dünnwandige Aluminiumbleche oder dünne Formteile aus Kunststoffen mit geringem Absorptionsverhalten verwendet. Die beiden senkrechten Träger 3.1, 3.2 des Rahmens 2 mit der Strahlungsquelle und der Detektoreinheit bewegen sich jeweils im Zwischenbereich zwischen dem Strahlungstunnel 2 und dem Untersuchungstunnel 5, so dass sie während der Untersuchung für die zu untersuchende Person 1 nicht sichtbar sind. Der Untersuchungsablauf beginnt damit, dass der Operator die zu kontrollierende Person 1 auffordert, sich im Untersuchungsbereich, der sich im Mittelbereich des Untersuchungstunnels 2 befindet, mit dem Rücken oder mit der Vorderseite zur äußeren Tunnelwand aufzustellen. Diese Position kann in geeigneter Weise an dieser Wand markiert sein. Danach löst der Operator den Durchleuchtungsvorgang aus, bei dem sich die für die zu untersuchende Person 1 nicht sichtbare Rahmenkonstruktion über den Untersuchungsbereich hinweg bewegt.

Während der Bewegung werden zeilenweise Transmissionsdaten von der Detektoreinheit empfangen. Nach Abschluss der Durchleuchtung bittet der Operator die zu untersuchende Person 1, den Untersuchungstunnel 5 zu verlassen. Nach Auswertung der Transmissionsbilder wird die nächste Person 1 zum Betreten des Untersuchungstunnels 5 gebeten. Es ist möglich, den Untersuchungstunnel während des Untersuchungsvorganges mit Türen zu verschließen. Dies kann sich gegebenenfalls vorteilhaft für den Organisationsablauf und für die Minimierung der Strahlung im Außenbereich auswirken.

Da sich der Rahmen 3 in der Endposition aus der vorherigen Untersuchung befindet, wird er für die nächste Untersuchung rückwärts bewegt. Es ist nicht erforderlich, vor einer Untersuchung den Rahmen 3 jeweils in eine Ausgangsposition zurückzubewegen. Bei der Aufnahme mit rückwärtsbewegtem Rahmen 3 ist lediglich eine einfache Spiegelung der Bilddarstellung auf elektronischem Wege notwendig, um für alle Bilder eine Ansicht in gleicher Weise zu erhalten.

Bei einer alternativen Ausführungsform, die nicht Teil der beanspruchten Erfindung ist, erfolgt die Bewegung der Strahlenquelle und der Detektoreinheit beim Scannen nicht entlang eines Kreisbogens, sondern linear. Bei dieser Ausführungsform ist der Rahmen 3 mit den senkrechten Trägern 3.1, 3.2 über den Untersuchungsbereich linear bewegbar. Dazu ist der Rahmen 3 in Linearführungen aufgehängt, die oberhalb des Untersuchungsbereichs verlaufend angeordnet sind. Der Strahlentunnel 2 verläuft der Bewegung des Rahmens 3 angepasst ebenfalls geradlinig, nicht gekrümmt.

## Patentansprüche

1. Vorrichtung zur Detektion von verdächtigen Gegenständen mit einem Strahlungstunnel (2), in dem eine Röntgenstrahlungsquelle und eine Detektoreinheit angeordnet sind, deren Detektoren zur Detektion von transmittierter Strahlung auf die Röntgenstrahlungsquelle ausgerichtet sind, wobei in dem Strahlungstunnel (2) ein über einen Untersuchungsbereich bewegbarer Rahmen (3) angeordnet ist, der aus zwei mit Abstand parallel voneinander senkrecht verlaufenden und miteinander fest verbundenen Trägern besteht und wobei an einem senkrechten Träger die Strahlungsquelle und an dem anderen senkrechten Träger die Detektoreinheit befestigt ist, wobei der Rahmen um eine zentrale senkrechte Achse (4) drehbar ist, mit der einer der senkrechten Träger, bevorzugt der Träger mit der Strahlungsquelle, verbunden ist, **dadurch gekennzeichnet, dass** die Grundfläche des Strahlungstunnels die Form eines Kreissektors, bevorzugt die Form eines Halbkreises oder nahezu eines Halbkreises, aufweist.

2. Vorrichtung nach Anspruch 1, **dadurch gekennzeichnet, dass** die senkrechten Träger über einen Querträger miteinander verbunden sind.

3. Vorrichtung nach einem der vorherigen Ansprüche, **dadurch gekennzeichnet, dass** der Strahlungstunnel (2) eine Außenwand aufweist, die ein Röntgenstrahlen absorbierendes Material enthält.

4. Vorrichtung nach einem der vorherigen Ansprüche, **dadurch gekennzeichnet, dass** innerhalb des Strahlungstunnels ein Untersuchungstunnel (5) angeordnet ist, dessen Seitenwände aus für Röntgenstrahlen leicht durchdringbaren Materialien gefertigt sind, wobei sich die senkrechten Träger des Rahmens mit der Strahlungsquelle und der Detektoreinheit jeweils im Zwischenbereich zwischen dem Strahlungstunnel (2) und dem Untersuchungstunnel (3) bewegen.

5. Vorrichtung nach einem vorherigen Ansprüche, **dadurch gekennzeichnet, dass** an einem senkrechten Träger eine Strahlungsquelle mit zumindest einem Kollimator befestigt ist, der Röntgenstrahlen in einer senkrechten Strahlenebene abgibt, wobei die Strahlenebene auf eine senkrechte Detektorzeile ausgerichtet ist, die an dem anderen senkrechten Träger befestigt ist.

## Claims

1. Device for detecting suspicious objects comprising a radiation tunnel (2), in which an X-ray radiation source and a detector unit are arranged, the detectors of which for detecting transmitted radiation are aligned with the X-ray radiation source, wherein a frame (3) is arranged in the radiation tunnel (2), said frame being movable over an examination region and consisting of two supports, which extend vertically and parallel at a distance from one another and are fixedly connected to one another, and wherein the radiation source is secured to one vertical support and the detector unit is secured to the other vertical support, wherein the frame is rotatable about a central vertical spindle (4), to which one of the vertical supports, preferably the support having the radiation source, is connected, **characterized in that** the basic area of the radiation tunnel has the shape of a circle sector, preferably the shape of a semicircle or almost a semicircle.

2. Device according to Claim 1, **characterized in that** the vertical supports are connected to one another via a transverse support.

3. Device according to either of the preceding claims, **characterized in that** the radiation tunnel (2) has an outer wall containing a material that absorbs x-rays.

4. Device according to any of the preceding claims, **characterized in that** an examination tunnel (5) is arranged within the radiation tunnel, the side walls of said examination tunnel being produced from materials that are readily permeable to x-rays, wherein the vertical supports of the frame with the radiation source and the detector unit move in each case in the intermediate region between the radiation tunnel (2) and the examination tunnel (3).

5. Device according to any of the preceding claims, **characterized in that** a radiation source with at least one collimator, which emits x-rays in a vertical radiation plane, is secured to one vertical support, wherein the radiation plane is aligned with a vertical detector row secured to the other vertical support.

## Revendications

1. Appareil destiné à la détection d'objets suspects à l'aide d'un tunnel à rayons X (2), à l'intérieur duquel sont agencées une source de rayons X et une unité de capteurs, dont les capteurs sont orientés vers la source de rayons X pour la détection de rayonnements transmis, dans lequel un cadre (3) mobile sur une zone d'examen, consistant en deux supports s'étendant verticalement de manière espacée parallèlement l'un à l'autre et rattachés l'un de l'autre de manière fixe, est agencé dans le tunnel à rayons X (2), et dans lequel la source de rayons X est fixée à un support vertical et l'unité de capteurs est fixée à l'autre support vertical, dans lequel le cadre peut tourner autour d'un axe vertical central (4), auquel est rattaché l'un des supports verticaux, de préférence le support auquel est fixé la source de rayons X, **caractérisé en ce que** la surface de base du tunnel à rayons X possède la forme d'un secteur circulaire, de préférence la forme d'un demi-cercle ou d'un quasi demi-cercle.

2. Appareil selon la revendication 1, **caractérisé en ce que** les supports verticaux sont rattachés l'un à l'autre par un support transversal.

3. Appareil selon l'une des revendications ci-dessus, **caractérisé en ce que** le tunnel à rayons X (2) comporte une paroi externe, contenant un matériau absorbant les rayons X.

4. Appareil selon l'une des revendications ci-dessus, **caractérisé en ce qu'**à l'intérieur du tunnel à rayons X est agencé un tunnel d'examen (5), dont les parois latérales sont faites d'un matériau transparent aux rayons X, dans lequel les supports verticaux du cadre portant la source de rayons X et l'unité de capteurs se déplacent respectivement dans la zone intermédiaire entre le tunnel à rayons X (2) et le tunnel d'examen (3) .

5. Appareil selon l'une des revendications ci-dessus, **caractérisé en ce qu'**une source de rayons X dotée d'au moins un collimateur est fixée à un support vertical, ce collimateur émettant les rayons X dans un plan d'ondes vertical, dans lequel le plan d'ondes est orienté vers une cellule de capteur verticale, fixée à l'autre support vertical.
